Europäisches Patentamt

(19) European Patent Office

Office européen des brevets

(11) Numéro de publication: **0 285 806**
**B1**

(12) **FASCICULE DE BREVET EUROPEEN**

(45) Date de publication du fascicule du brevet:
27.06.90

(51) Int. Cl.⁵: **B60C 23/04**

(21) Numéro de dépôt: **88103234.6**

(22) Date de dépôt: **03.03.88**

(54) **Dispositif de surveillance et/ou de gestion de l'état de fonctionnement d'un pneumatique utilisant la conduction électrique pour la transmission d'un signal électrique entre une roue et le véhicule.**

(30) Priorité: **24.03.87 FR 8704120**

(43) Date de publication de la demande:
**12.10.88 Bulletin 88/41**

(45) Mention de la délivrance du brevet:
**27.06.90 Bulletin 90/26**

(84) Etats contractants désignés:
**AT BE CH DE ES FR GB GR IT LI LU NL SE**

(56) Documents cités:
**WO-A-83/04224**
**DE-A- 2 502 238**
**US-A- 2 235 930**
**US-A- 3 297 984**
**US-A- 3 693 149**
**US-A- 3 757 294**

(73) Titulaire: **COMPAGNIE GENERALE DES ETABLISSEMENTS MICHELIN-MICHELIN & CIE, 4, rue du Terrail, F-63000 Clermont-Ferrand(FR)**

(72) Inventeur: **Pompier, Jean-Pierre, Enval, F-63530 Volvic(FR)**

(74) Mandataire: **Bauvir, Jacques et al, Michelin & Cie . Service K. Brevets, F-63040 Clermont-Ferrand Cédex(FR)**

ACTORUM AG

## Description

La présente invention se rapporte à la surveillance des pneumatiques, en particulier à des dispositions grâce auxquelles la transmission du signal électrique nécessaire à ladite surveillance peut se faire par conduction électrique entre la roue et le véhicule, tout en transmettant une information suffisamment riche pour permettre une surveillance efficace.

On a proposé dans la demande de brevet FR-A 2 605 938 d'assurer la transmission d'un signal électrique par conduction électrique entre une roue d'un véhicule et le véhicule proprement dit, c'est-à-dire entre l'espace fixe dudit véhicule et l'espace mobile en rotation. Pour cela, l'un au moins des deux chemins conducteurs de l'électricité, nécessaire pour assurer la transmission d'un signal électrique, passe par un roulement du véhicule. Or, un roulement constitue une pièce mécanique au travers de laquelle la conduction électrique n'est pas parfaite. Il introduit dans la ligne électrique une résistance parasite, dont la valeur n'est pas maîtrisable et est susceptible de fluctuer dans une plage assez large en fonction notamment de l'échauffement et des efforts transmis. Cela ne pose pas de problème majeur si le signal électrique transmis est du type "tout ou rien", donc par exemple si l'on installe sur le pneumatique un simple manocontacteur.

Malencontreusement, un simple manocontacteur ne permet pas de rendre compte de manière suffisante de l'état de fonctionnement d'un pneumatique. La température est un paramètre important dont il faut tenir compte. De plus, il est souhaitable de pouvoir distinguer une perte de pression lente, laquelle nécessite sans doute de ménager le pneumatique, par exemple en roulant à faible allure, d'une perte de pression rapide, qui rendrait l'arrêt immédiat impératif.

L'invention vise à utiliser une transmission par conduction électrique entre la roue et le véhicule, du type précédemment décrit, qui fournit 2 chemins conducteurs susceptibles de faire passer, entre la roue et le véhicule un seul signal électrique, et à s'accommoder de ses imperfections, tout en parvenant à une surveillance efficace du fonctionnement d'un pneumatique.

L'objectif de l'invention est d'assurer la surveillance du fonctionnement du pneumatique en donnant au moins deux alarmes distinctes : une première alarme lorsque le fonctionnement entre dans une zone considérée comme anormale et une seconde alarme lorsque le fonctionnement entre dans une zone dangereuse.

Selon l'invention, un circuit électrique est monté sur les organes tournants ; il est destiné à être utilisé dans un dispositif de surveillance de l'état de fonctionnement d'un pneumatique, ledit dispositif utilisant une transmission d'un signal électrique entre lesdits organes tournants et l'espace fixe du véhicule par conduction électrique, via un chemin conducteur comprenant l'ensemble des organes mobiles en rotation conducteurs de l'électricité, le ou les roulements et le porte-roue, et via un autre chemin conducteur comprenant un élément conducteur passant à l'intérieur des organes mécaniques placés à l'intérieur du ou des roulements, l'un des chemins assurant la connexion électrique entre les moyens d'exploitation placés sur le véhicule et un circuit électrique monté sur les organes tournants, l'autre des chemins assurant le retour vers la masse du véhicule ; ledit dispositif assure le repérage du franchissement d'un minimum en dessous duquel la pression n'est plus considérée comme normale et assure en outre le contrôle d'au moins un autre paramètre qui permet de déterminer que ledit fonctionnement est dans une zone dangereuse lorsqu'il franchit un seuil qui lui est associé ; dans une première variante, ledit circuit électrique est remarquable en ce qu'il comporte, disposés entre deux pôles, des moyens capteurs et des moyens de mise en forme grâce auxquels la résistance électrique vue entre les deux pôles est très élevée si la pression est supérieure audit minimum et si le ou lesdits paramètres n'ont pas franchi leurs seuils respectifs, ladite résistance électrique est moyenne si la pression est inférieure audit minimum et si le ou lesdits paramètres n'ont pas franchi leurs seuils respectifs, et est faible si l'autre ou l'un des autres paramètres a(ont) franchi le seuil qui lui(leur) est associé.

On entend par résistance électrique élevée une résistance infinie, ou de préférence une résistance de l'ordre de celle que présente un semi-conducteur à l'état bloqué (transistor ou thyristor ou diode dans le sens non passant). Pour la sécurité de fonctionnement d'un tel dispositif, il est souhaitable de pouvoir détecter les défaillances du dispositif de surveillance lui-même. Ceci est rendu possible si, à l'état jugé normal pour le fonctionnement du pneumatique, la résistance observée n'est pas infinie ; il suffit de vérifier la présence d'un courant résiduel très faible mais non nul. L'absence de celui-ci, pendant au moins une période de temporisation permettra de détecter une interruption accidentelle du circuit.

On entend par résistance électrique faible une résistance nulle, ou quasi nulle comme celle que présente un semi-conducteur à l'état passant.

On entend par résistance électrique moyenne une résistance de valeur intermédiaire entre les valeurs définies ci-dessus, de préférence supérieure de deux ordres de grandeurs à la résistance dite faible afin que, après avoir inséré en série ladite résistance vue des bornes du circuit et la résistance parasite due à la transmission par conduction électrique, on puisse encore distinguer les 3 niveaux définis par le circuit électrique monté sur la roue, au besoin avec l'aide d'une temporisation.

Comme expliqué ci-dessus, on surveille au moins un paramètre en sus de la pression dite minimale. Il peut s'agir soit de la pression de gonflage et le seuil associé est une valeur de la pression inférieure audit minimum, soit de la température régnant à l'intérieur du pneumatique et le seuil associé est une valeur maximale de ladite température.

Pour la plupart des applications de surveillance de la pression des pneumatiques, notamment en général pour les pneumatiques de véhicules routiers, il est souhaitable de surveiller à la fois un second seuil de pression et un seuil de température. En effet, le fonctionnement sera dangereux, non seulement en dessous d'un certain seuil de pression, mais aussi en cas d'échauffement excessif pouvant conduire à de graves dégradations des matériaux constituant le pneumatique. On peut fort bien atteindre ce niveau d'échauffement tout en ayant une pression à peine inférieure audit minima et supérieure au seuil de la zone dangereuse (par exemple lorsque le pneumatique est très chargé), voire même avec une pression supérieure au minimum considéré en cas de fortes sollicitations.

Selon une particularité de réalisation, sur la roue, on dispose entre deux pôles et en parallèle deux circuits incluant chacun un semi-conducteur, lesdits semi-conducteurs étant montés de telle sorte que les sens passant sont inverses l'un de l'autre pour chacun desdits circuits, et en ce que, sur le véhicule, on ferme le circuit débutant par lesdits deux chemins conducteurs par 2 branches montées en parallèle, chaque branche comportant un semi-conducteur, lesdits semi-conducteurs étant montés en sens inverse l'un par rapport à l'autre.

Ce circuit permet d'assurer la surveillance du pneumatique et/ou la gestion du fonctionnement de celui-ci.

L'invention est illustrée ci-dessous au moyen de différents exemples de réalisation permettant de bien la comprendre et d'en saisir tous les avantages.

Les figures 1 à 5 et 8 illustrent les exemples de circuits selon l'invention.

Les figures 6 et 7 illustrent des manocontacteurs utilisables avec de tels circuits.

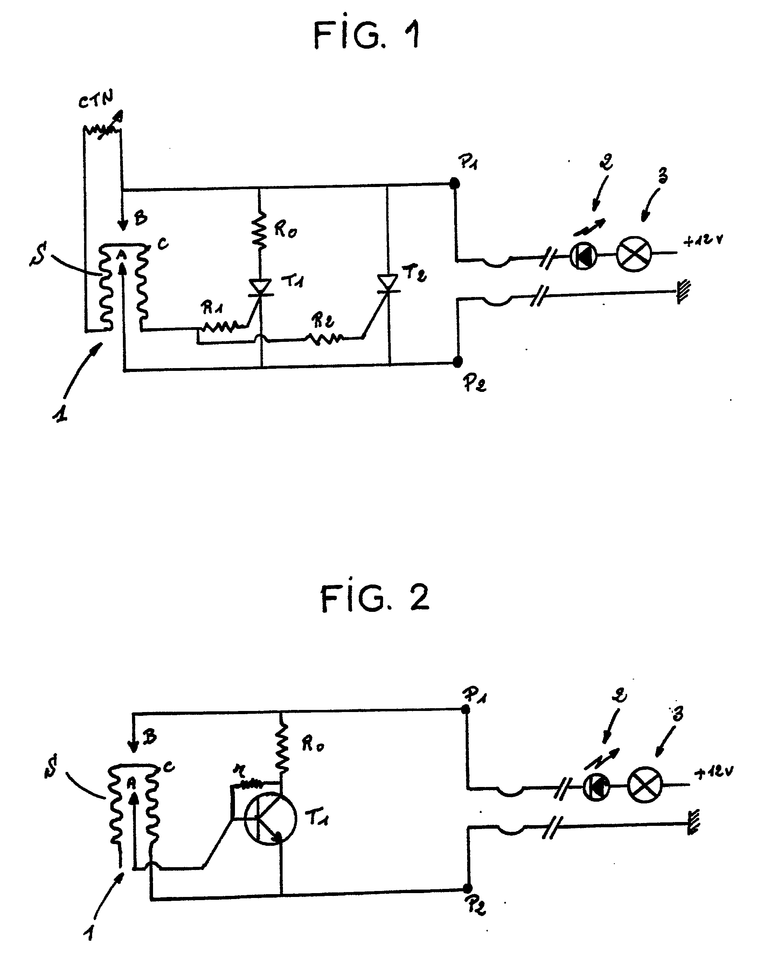

A la figure 1, on voit un manocontacteur 1 à deux seuils et une résistance CTN à coefficient de température négatif constituant les moyens capteurs. Le dispositif de surveillance fournit une première alarme indiquant une pression anormale grâce à une diode 2 électroluminescente et une seconde alarme indiquant un fonctionnement dangereux par une ampoule électrique 3, ladite diode 2 et l'ampoule électrique 3 constituant les moyens d'exploitation montés au tableau de bord du véhicule.

Le circuit monté sur la roue est représenté à gauche des pôles $P_1$ et $P_2$. Les moyens d'exploitation sont connectées en série d'une part au pôle positif de la batterie et d'autre part au pôle $P_1$ dudit circuit, via un premier chemin conducteur de l'électricité. Le pôle $P_2$ dudit circuit est raccordé à la masse sur l'espace fixe du véhicule via l'autre chemin conducteur de l'électricité. Entre les pôles $P_1$ et $P_2$, on connecte en parallèle une branche comportant un thyristor $T_2$ et une autre branche comportant un thyristor $T_1$ et une résistance $R_0$, constituant essentiellement les moyens de mise en forme.

Le dispositif est prévu pour donner ladite seconde alarme lorsque soit la pression est inférieure à un seuil inférieur audit minimum au dessus duquel la pression est normale, soit la température est supérieure à une valeur maximale. Ceci permet d'effectuer la surveillance des pneumatiques d'une manière très simple tout en étant suffisamment sélective pour être efficace.

Le manocontacteur 1 constituant les moyens capteur de pression comporte un pôle commun C et deux voies A et B, ledit manocontacteur 1 mettant en contact électrique A et C lorsque la pression est supérieure audit minimum, laissant le contact C flottant lorsque ladite pression est inférieure audit minimum et supérieure audit seuil associé, et mettant en contact électrique B et C lorsque la pression est inférieure audit seuil associé. Sur toutes les figures, le soufflet S schématisant le manocontacteur est supposé conducteur.

Le circuit monté sur la roue comporte donc un premier thyristor $T_1$ dont l'anode est reliée au pôle positif dudit circuit via une résistance $R_0$ et dont la cathode est reliée au pôle négatif dudit circuit, et dont la gachette est reliée aux moyens capteurs de pression via la résistance $R_1$ de telle sorte que la résistance $R_0$ constitue la résistance moyenne vue entre les deux pôles dudit circuit électrique lorsque le contact C est flottant. Ledit circuit comporte un second thyristor $T_2$ dont l'anode est relié directement au pôle $P_1$, la cathode au pôle $P_2$, la gachette via la résistance $R_2$ ($R_2 > R_1$) aux moyens capteurs de pression et de température de façon que la résistance interne du second thyristor $T_2$ constitue, lorsqu'il est amorcé, ladite résistance électrique faible vue entre les deux pôles du circuit électrique.

N'importe quel semi-conducteur (transitor ou thyristor) capable d'inverser l'état du contact entre C et A pourrait convenir pour $T_1$ (c'est-à-dire si A et C forment un contact fermé, $T_1$ est bloqué, et inversement). Il est préférable que $T_2$ soit un thyristor pour avoir un changement d'état brusque au moment précis où la valeur de la résistance CTN correspond au seuil de température à détecter.

La diode électroluminescente 2 brille lorsque $T_1$ est passant, c'est-à-dire lorsque la pression est inférieure au minimum considéré, et l'ampoule électrique 3 brille lorsque $T_2$ est passant, donc lorsque le fonctionnement est jugé dangereux, c'est-à-dire dans l'exemple considéré quand soit la température est trop élevée, soit la pression est inférieure au seuil fixé sous ledit minimum.

La figure 2 illustre un exemple de circuit utilisé pour surveiller le fonctionnement anormal du pneumatique (pression inférieure au minima) et le fonctionnement dangereux (pression inférieure à un seuil) sans prendre la température en considération. On voit le même manocontacteur 1 à deux seuils, et un transistor $T_1$ inversant l'état de contact entre A et C pour insérer entre $P_1$ et $P_2$ la résistance $R_0$ pour constituer ladite résistance moyenne lorsque le contact C est flottant. La résistance faible est obtenue par le contact direct entre C et B.

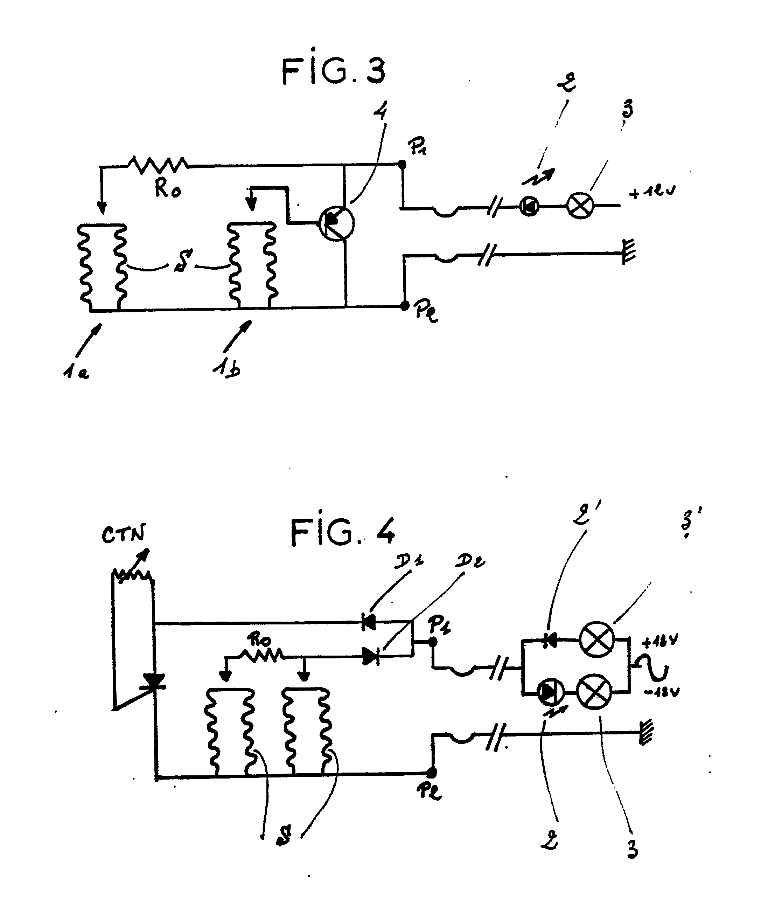

L'invention peut aussi être utilisée avec plusieurs manocontacteurs à une seule voie, ce qui permet d'éviter l'inversion électrique. A la figure 3, on retrouve la résistance $R_0$ donnant la resistance moyenne du circuit lorsque la pression a franchi un minimum, c'est-à-dire lorsque le manocontacteur 1a est fermé. La résistance faible est obtenue lors de la fermeture du second manocontacteur 1b. De préférence, un semi-conducteur 4 permet de contrôler le bon fonctionnement du dispositif commun expliqué ci-dessus.

Une seconde voie de réalisation de l'invention permet d'augmenter le nombre de paramètres observés en disposant un circuit supplémentaire entre les pôles $P_1$ e $P_2$, en parallèle par rapport au premier circuit, et en soumettant ce circuit supplémentaire à une tension de signe opposé à celui de la tension appliquée au premier circuit.

La figure 4 montre une réalisation avec une tension alternative par rapport à la masse du véhicule. L'aiguillage vers l'un ou l'autre groupe de moyens capteurs et de mise en forme se fait par les semiconducteurs constitués par les diodes $D_1$ et $D_2$. La diode 2 et l'ampoule 3 donnent une alarme correspondant aux capteurs associés au circuit incluant la diode $D_2$, tandis que l'ampoule 3' ne donne une alarme que pour le circuit incluant la diode $D_1$, de par l'existence de la diode 2'. On peut bien sûr augmenter le nombre de paramètres observés et utiliser la diode 2' comme moyen d'alarme selon l'enseignement de la présente description.

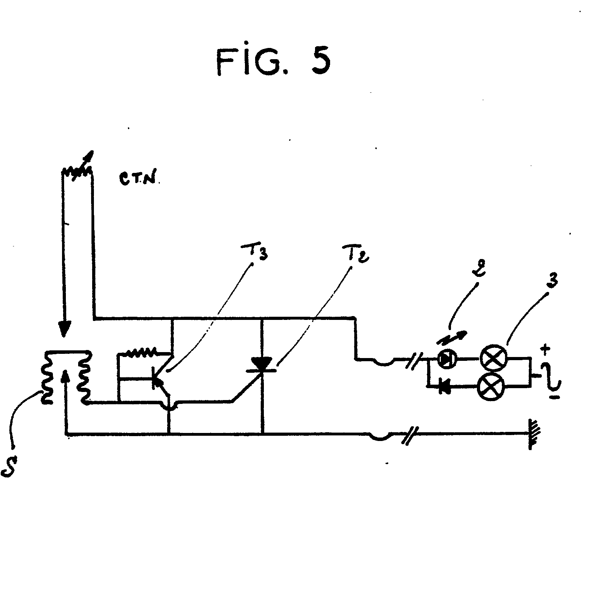

A la figure 5, on voit une variante où le semi-conducteur du circuit sur la roue correspondant aux moyens d'alarme 2 et 3 est un transistor PNP $T_3$ monté dans le sens convenable et jouant en plus le même rôle que le transistor $T_1$ du circuit représenté à la figure 1. Cette variante permet de minimiser le nombre de composants à installer sur la roue. On peut noter qu'il est avantageux d'utiliser des semiconducteurs faisant office d'interrupteurs pour minimiser l'influence des résistances de contact d'un manocontacteur, dues par exemple à l'oxydation.

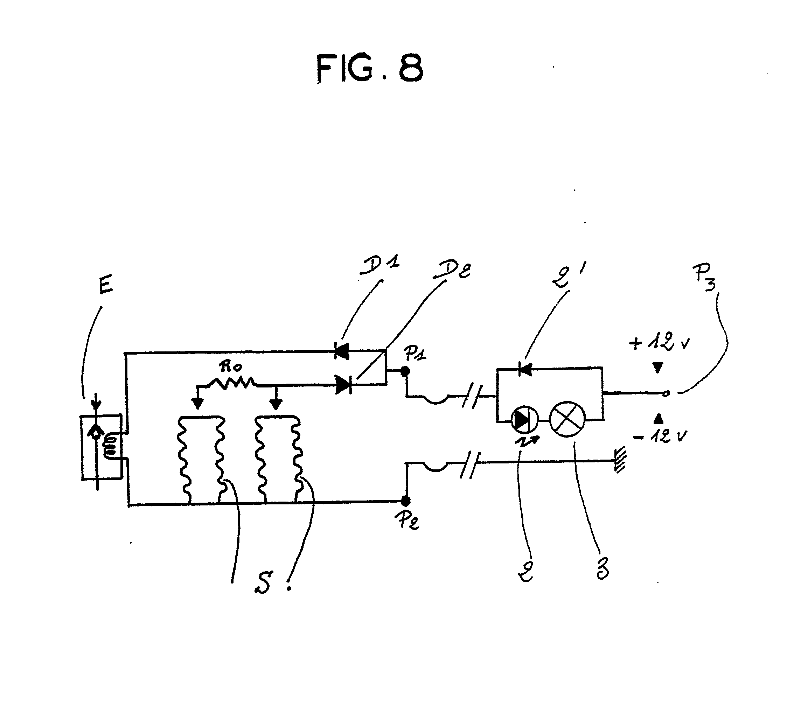

Un circuit tel que celui des figures 4 et 5 crée deux voies électriques dans lesquelles les courants circulent en sens opposés l'un de l'autre. On peut également utiliser l'une de ces deux voies, ou les deux, pour envoyer un signal de commande d'une électrovanne pour assurer le gonflage (ou le dégonflage) du pneumatique. Le circuit est alors utilisé pour assurer la gestion du fonctionnement du pneumatique. Par exemple, à la figure 8, on voit une électrovalve E. Celle-ci est commandée en appliquant au pôle $P_3$ une tension positive (potentiel supérieur au potentiel de la masse), via les diodes 2' et $D_1$. L'autre branche du circuit monté sur le véhicule, comportant les diodes 2 et $D_2$, est utilisée pour la surveillance du pneumatique comme expliqué en relation avec la figure 4.

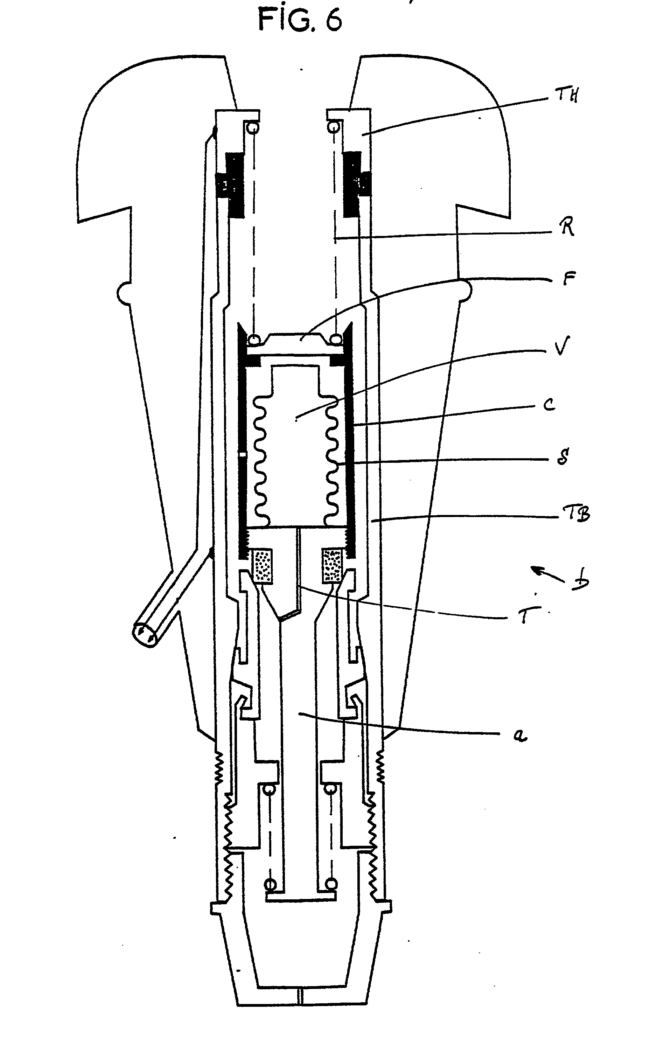

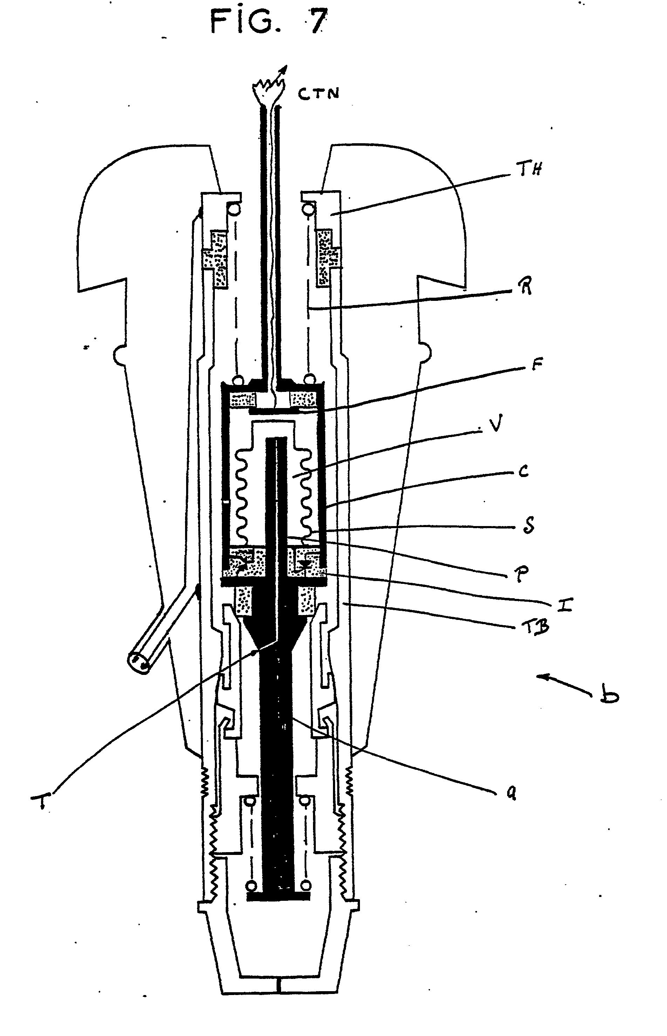

De manière fort avantageuse, le manocontacteur utilisé pour surveiller la pression peut être ajouté à un clapet a d'une valve b conventionnelle pour pneumatique, comme représenté aux figures 6 et 7. Ledit clapet a est prolongé axialement à sa partie intérieure d'un soufflet fermé S. Le bas du soufflet S est fixé de façon étanche sur le clapet a. On a constitué ainsi un volume V dont la hauteur varie avec la pression intérieure du pneumatique. Pour éviter que par diffusivité, les pressions entre l'intérieur du volume V et l'extérieur du volume s'équilibrent, le volume V intérieur dudit soufflet S est mis à la pression atmosphérique par l'intermédiaire d'une canalisation T percée à l'intérieur de la tige centrale dudit clapet a. Le soufflet S est conducteur de l'électricité.

Lorsque la pression du pneumatique est insuffisante, le soufflet S vient toucher une plaque F fixée à la base du clapet a par l'intermédaire du cylindre C constituant un dispositif de réglage en hauteur permettant d'étalonner le manocontacteur.

A la figure 6, on a représenté une valve b comportant un manocontacteur à une seule voie (par exemple utilisable avec les circuits représentés aux figures 3 et 4). Le cylindre C est en matériau isolant. La tubulure dans laquelle vient se visser le clapet a est faite en deux parties : une partie basse TB qui reçoit le clapet a et une partie haute TH, isolée électriquement de la partie basse, sur laquelle prend appui un ressort R conducteur de l'électricité. En vissant le clapet a, le ressort R fait contact avec la plaque F. Deux fils soudés aux deux parties de la tubulure sont noyés dans le caoutchouc ceinturant la valve b, et vont se raccorder au circuit contenant les moyens de mise en forme. Lorsque le soufflet S entre en contact avec la plaque F, le manocontacteur est fermé.

A la figure 7, on a représenté une valve b comportant un manocontacteur utilisable pour un circuit tel que représenté à la figure 5. Il s'agit donc d'un manocontacteur à deux voies, et la valve b comporte en plus une résistance CTN à coefficient de température négatif, disposée en bout du clapet a de telle sorte qu'elle pénètre à l'intérieur de la cavité pneumatique, là où la température est représentative de la sollicitation du pneumatique. Dans ce cas, le démontage du clapet a permet d'enlever tous les capteurs. Or ce démontage est toujours effectué lors du montage et du démontage d'un pneumatique sans chambre à air. Ces opérations de montage et de démontage ne sont donc pas affectées par la présence d'un dispositif de surveillance ainsi conçu.

Ce manocontacteur diffère de celui représenté à la figure 6 en ce que le cylindre C est réalisé en matériau conducteur, et est prolongé par un tube (conducteur) sur lequel est fixée la résistance CTN, par l'un de ses pôles. Ce cylindre appuie, lors du montage, sur le ressort R et est donc en contact électrique avec la partie haute TH de la tubulure. La plaque F est fixée à l'extrémité haute du cylindre C et est isolée de celui-ci. Elle est reliée à l'autre pôle de la résistance CTN. Une pointe P est disposée à l'intérieur du soufflet S pour constituer le troisième pôle du manocontacteur. Cette pointe est électriquement reliée à la partie basse TB de la tubulure. Pour éviter de devoir sortir une troisième connexion électrique de la valve, une pièce isolante I sépare le cylindre C du reste du clapet a. Le soufflet est fixé sur cette pièce isolante I. Les composants électriques nécessaires pour constituer la totalité du circuit électrique sont logés dans cette pièce isolante I. On pourrait aussi utiliser une telle valve avec le circuit représenté à la figure 1 au prix que quelques modifications de branchement électrique.

Les avantages de tels dispositifs sont les suivants : il n'y a aucune modification de la jante et le fonctionnement du clapet de valve n'est pas modifié ; on conserve la possibilité de changer le clapet de l'extérieur et de le remplacer par un autre clapet dont le tarage serait différent; au moment de l'introduction de l'air dans le pneumatique (pour un gonflage ou une rectification de la pression) un contact électrique s'établit et l'on peut contrôler la liaison électrique.

## Revendications

1. Circuit électrique utilisé pour la surveillance de l'état de fonctionnement d'un pneumatique, ledit circuit utilisant une transmission d'un signal électrique entre lesdits organes tournants et l'espace fixe du véhicule par conduction électrique, via un chemin conducteur comprenant l'ensemble des organes mobiles en rotation conducteurs de l'électricité, le ou les roulements et le porte-roue, et via un autre chemin conducteur comprenant un élément conducteur passant à l'intérieur des organes mécaniques placés à l'intérieur du ou des roulements, l'un des chemins assurant la connexion électrique entre les moyens d'exploitation (2, 3) placés sur le véhicule et un circuit électrique monté sur les organes tournants, l'autre des chemins assurant le retour vers la masse du véhicule, ledit dispositif assurant le repérage du franchissement d'un minimum en dessous duquel la pression n'est plus considérée comme normale et assurant en outre le contrôle d'au moins un autre paramètre qui permet de déterminer que ledit fonctionnement est dans une zone dangereuse lorsqu'il franchit un seuil qui lui est associé, caractérisé en ce que ledit circuit électrique comporte, disposés entre deux pôles (P1, P2) des moyens capteurs et des moyens de mise en forme grâce auxquels la résistance électrique vue entre les deux pôles est très élevée si la pression est supérieure audit minimum et si le ou lesdits paramètres n'ont pas franchi leurs seuils respectifs, ladite résistance électrique est moyenne si la pression est inférieure audit minimum et si le ou lesdits paramètres n'ont pas franchi leurs seuils respectifs, et est faible si l'autre ou l'un des autres paramètres a(ont) franchi le seuil qui(leur) est associé.

2. Circuit selon la revendication 1, caractérisé en ce que l'un des autres paramètres est la pression et le seuil associé est une valeur de la pression inférieure audit minimum.

3. Circuit selon la revendication 2, caractérisé en ce que les moyens capteurs de la pression sont constitués par un manocontacteur (1) à un pôle commun C et deux voies A et B, ledit manocontacteur mettant en contact électrique A et C lorsque la pression est supérieure audit minimum, laissant le contact C flottant lorsque ladite pression est inférieure audit minimum et supérieure audit seuil associé, et mettant en contact électrique B et C lorsque la pression est inférieure audit seuil associé.

4. Circuit selon la revendication 3 caractérisé en ce que lesdits moyens de mise en forme associés aux moyens capteurs comportent un semi-conducteur (T1) (transistor ou thyristor) qui inverse l'état de contact électrique entre A et C et dont l'anode est reliée au pôle positif dudit circuit via une résistance R0 et dont la cathode est reliée au pôle négatif dudit circuit et dont la gachette (ou la base) est reliée aux moyens capteurs de telle sorte que la résistance R0 constitue la résistance moyenne vue entre les 2 pôles dudit circuit électrique.

5. Circuit selon la revendication 1 ou 2, caractérisé en ce que l'un des autres paramètres est la température et le seuil associé est une valeur maximale de ladite température.

6. Circuit selon la revendication 5, caractérisé en ce que la température est sondée par une résistance variable à coefficient de température négatif (CTN) reliée à la gachette d'un thyristor (T2) connecté par ailleurs auxdits pôles de sorte que, lorsque la température dépasse un seuil, ledit thyristor (T2) bascule à l'état passant.

7. Circuit selon la revendication 1, caractérisé en ce que, sur la roue, on dispose entre deux pôles (P1, P2) et en parallèle deux branches incluant chacune un semi-conducteur (D1, D2) lesdits semi-conducteurs (D1, D2) étant montés de telle sorte que les sens passant sont inverses l'un de l'autre pour chacune desdites branches, et en ce que, sur le véhicule, on ferme le circuit débutant par lesdits deux chemins conducteurs par 2 branches montées en parallèle, chaque branche comportant un semi-conducteur (2, 2'), lesdits semi-conducteurs (2, 2') étant montés en sens inverse l'un par rapport à l'autre.

8. Circuit de surveillance de l'état de fonctionnement d'un pneumatique utilisant un dispositif électrique selon l'une des revendications 1 à 7, et un manocontacteur intégré au clapet d'une valve, comportant un soufflet fixé à l'extrémité axialement intérieur dudit clapet, le volume intérieur dudit soufflet étant mis à la pression atmosphérique par l'intermédiaire d'une canalisation (T) percée à l'intérieur de la ligne centrale dudit clapet.

## Patentansprüche

1. Elektrischer Schaltkreis, der für die Überwachung des Funktionszustandes eines Luftreifens verwendet wird, wobei der Schaltkreis zur Übertragung eines elektrischen Signales zwischen den rotierenden Teilen und den fahrzeugfesten Teilen die elektrische Leitung über einen Leiterpfad verwendet, der die Gesamtheit der elektrisch leitenden rotierenden Teile, das oder die Lager und die Radaufhängung und einen anderen Leiterpfad, der ein leitendes Element, das im Inneren der mechanischen Teile, die im Inneren des oder der Lager vorgesehen sind, umfaßt, wobei einer der Pfade die elektrische Verbindung zwischen den Anzeigemitteln (2, 3), die am Fahrzeug untergebracht sind und einem Schaltkreis, der auf den rotierenden Teilen montiert ist, sichert, während der andere Pfad die Rückleitung zur Fahrzeugmasse sichert und wobei die Vorrichtung das Erkennen des Erreichen eines Minimums sichert, unter dem der Druck nicht mehr als normal angesehen wird und darüberhinaus die Kontrolle zumindest eines weiteren Parameters sichert, der es erlaubt, festzustellen, daß der Betrieb in einem gefährlichen Bereich erfolgt, wenn eine Schranke überschritten wird, die diesem Parameter zugeordnet ist, dadurch gekennzeichnet, daß der elektrische Schaltkreis zwischen zwei Polen (P1, P2) Aufnahmemittel und Formmittel umfaßt, dank denen der elektrische Widerstand zwischen den beiden Polen sehr groß ist, wenn der Druck größer dem genannten Minimum ist und wenn der oder die Parameter ihre entsprechenden Schranken nicht überschritten haben, der elektrische Widerstand mittel ist, wenn der Druck unterhalb des Minimums ist und der oder die Parameter ihre entsprechende Schranken nicht überschritten haben und klein ist, wenn der andere oder einer der anderen Parameter seine (ihre) ihm (ihnen) zugeordnete(n) Schranke(n) übrschritten hat (haben).

2. Schaltkreis nach Anspruch 1, dadurch gekennzeichnet, daß einer der anderen Parameter der Druck ist und die ihm zugeordnete Schranke ein Druck ist, der unter dem genannten Minimum liegt.

3. Schaltkreis nach Anspruch 2, dadurch gekennzeichnet, daß die Druckaufnahmemittel aus einem Druckaufnehmer (1) mit einem gemeinsamen Pol C und zwei Schaltpunkten A und B bestehen, wobei der Druckaufnehmer einen elektrischen Kontakt zwischen A und C herstellt, wenn der Druck größer dem genannten Minimum ist, den Kontakt C offen läßt, wenn der Druck kleiner dem genannten Minimum und größer der genannten zugeordneten Schranke ist und B mit C elektrisch verbindet, wenn der Druck kleiner der zugeordneten Schranke ist.

4. Schaltkreis nach Anspruch 3, dadurch gekennzeichnet, daß die Formmittel, die den Aufnahmemittel zugeordnet sind, einen Halbleiter (T1) (Transistor oder Thyristor) aufweisen, der den elektrischen Kontaktzustand zwischen A und C invertiert und dessen Anode mit dem positiven Pol des Schaltkreises über einen Widerstand R0 verbunden ist und dessen Kathode mit dem negativen Pol des Schaltkreises verbunden ist und dessen Trigger (oder Basis) mit den Aufnahmemitteln so verbunden ist, daß der Widerstand R0 den mittleren Widerstand zwischen den beiden Polen des elektrischen Schaltkreises bildet.

5. Schaltkreis nach Anspruch 1 oder 2, dadurch gekennzeichnet, daß einer der anderen Parameter die Temperatur ist, und daß die ihr zugeordnete Schranke ein Maximalwert der Temperatur ist.

6. Schaltkreis nach Anspruch 5, dadurch gekennzeichnet, daß die Temperatur durch einen Widerstand mit negativen Temperaturkoeffizienten (CTN) erfaßt wird, der mit dem Trigger eines Thyristors (T2) verbunden ist, der mit den Polen so verbunden ist, daß, wenn die Temperatur eine Schranke überschreitet, der Thyristor (T2) in seinen Durchgangszustand kommt.

7. Schaltkreis nach Anspruch 1, dadurch gekennzeichnet, daß auf dem Rad zwischen zwei Polen (P1, P2) und parallel zueinander zwei Äste vorgesehen sind, die jeweils einen Halbleiter (D1, D2) aufweisen, wobei die beiden Halbleiter (D1, D2) so angeordnet sind, daß ihre Durchlaßrichtung einander entgegengesetzt sind und dadurch, das am Fahrzeug, der von den beiden Leiterpfaden ausgehende Kreis durch zwei parallel angeordnete Äste geschlossen wird, wobei jeder Ast einen Halbleiter (2, 2′) aufweist, wobei die Halbleiter (2, 2′) umgekehrt zueinander vorgesehen sind.

8. Schaltkreis zur Überwachung des Funktionszustandes eines Luftreifens, der eine elektrische Vorrichtung nach einem der Ansprüche 1 bis 7 verwendet und einen Druckaufnehmer, der in den Teller eines Ventils integriert ist und einen am axial inneren Ende des genannten Tellers befestigten Balg aufweist, wobei das innere Volumen des Balges mittels eines Kanals (T), der im Inneren der Ventilstange des Tellers vorgesehen ist, auf Atmosphärendruck gebracht ist.

**Claims**

1. Electric circuit for monitoring of the operating condition of a tire, said circuit transmitting an electrical signal between electrically conductive rotating elements of a vehicle wheel and a stationary space of the vehicle by electric conduction by means of a conductive path comprising the set of electrically conductive rotating elements, the bearings of the wheel and the wheel carrier, and by means of another conductive path comprising a conductive element passing through mechanical elements placed on the inside of the bearings, one of the paths providing an electrical connection between operation means (2, 3) placed on the vehicle and an electrical circuit mounted on the rotating elements, the other of the paths providing the grounding to the vehicle, said circuit identifying when tire pressure drops beneath a minimum pressure which is not considered normal and further providing an indication of at least one other parameter which makes it possible to determine that operation of said tire is in a dangerous zone when said at least one other parameter crosses a respective threshold associated therewith, characterized by the fact that said circuit comprises, arranged between two poles (P1, P2), sensing means and signal shaping means operating in such a way that the electric resistance seen between the two poles is very high if tire pressure is greater than said minimum and if the at least one parameter has not crossed said respective threshold, said electric resistance being intermediate if the pressure is less than said minimum and if said at least one other parameter has not crossed said respective threshold, and said electric resistance being slight if said at least one other parameter has crossed said respective threshold.

2. A circuit according to claim 1, characterized by the fact that said at least one other parameter is the pressure and the associated threshold is a value of the pressure less than said minimum pressure.

3. A circuit according to claim 2, characterized by the fact that the sensing means consists of a pressure switch having a common pole C and two contacts A and B, said pressure switch putting contact A and pole C in electric contact when the tire pressure is greater than said minimum, leaving pole C floating when the tire pressure is less than said minimum but greater than said respective threshold, and putting contact B and pole C in electric contact when the tire pressure is less than said respective threshold.

4. A circuit according to claim 3, characterized by the fact that said signal shaping means coupled to said sensing means comprises a semiconductor T1 (transistor or thyristor) which reverses the state of electric contact between contact A and pole C, said semiconductor having its anode connected to the positive pole of said circuit by a resistance $R_0$, its cathode connected to the negative pole of said circuit, its control electrode connected to said sensing means so that resistance $R_0$ constitutes the average resistance seen between the two poles of said electric circuit.

5. A circuit according to claim 1 or 2, characterized by the fact that said at least one other parameter is temperature, and the respective threshold is a maximum value of said temperature.

6. A circuit according to claim 5, characterized by the fact that said sensing means comprises a negative temperature coefficient variable resistance (CTN) connected to the control electrode of a thyristor ($T_2$), said thyristor being further connected to said poles so that, when the temperature goes beyond the threshold, said thyristor ($T_2$) changes from a non-conducting to a conducting state.

7. A circuit according to claim 1, characterized by the fact that, on the wheel, it is arranged between two poles ($P_1$, $P_2$), and in parallel, two circuit branches, each including a semiconductor device ($D_1$, $D_2$), said semiconductor devices ($D_1$, $D_2$) being mounted so that the conducting direcitons thereof are opposite to one another for each of said circuit branches, and by the fact that, on the vehicle, said circuit comprising said two electrical paths is closed by two circuit branches mounted in parallel, each circuit branch comprising a semiconductor device (2, 2'), said semiconductor devices (2, 2é) of said circuit branches being mounted in opposite directions relative to one another.

8. A circuit according to one of the claims 1 to 7, comprising a pressure switch integrated in a clack of a valve, said pressure switch comprising a bellows fastened to an end axially inside said clack, said bellows having an inside volume maintained at atmospheric pressure by means of a duct (T) provided on an inside of a central line of said clack

FIG. 1

FIG. 2

EP 0 285 806 B1

# FIG. 3

# FIG. 4

# FİG. 5

# FIG. 6

# FIG. 7

# FIG. 8